(19) **Europäisches Patentamt / European Patent Office / Office européen des brevets**

(11) **EP 2 963 981 A1**

(12) **EUROPEAN PATENT APPLICATION**

(43) Date of publication:
06.01.2016 Bulletin 2016/01

(51) Int Cl.:
*H04W 52/02* (2009.01)     *H04W 74/00* (2009.01)
*H04W 74/08* (2009.01)

(21) Application number: 15180525.6

(22) Date of filing: 13.09.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 16.11.2011 US 201161560778 P
12.09.2012 US 201213612730

(62) Document number(s) of the earlier application(s) in accordance with Art. 76 EPC:
12766539.6 / 2 781 126

(71) Applicant: Qualcomm Incorporated
San Diego, CA 92121-1714 (US)

(72) Inventors:
• HOMCHAUDHURI, Sandip
San Diego, CA 92121-1714 (US)
• NAGARAJAN, Vinod
San Diego, CA 92121-1714 (US)
• RAJAGOPALAN, Anand
San Diego, CA 92121-1714 (US)
• JAYARAMAN, Arunkumar
San Diego, CA 92121-1714 (US)
• ZHU, Yi
San Diego, CA 92121-1714 (US)
• ZHANFENG, Jia
San Diego, CA 92121-1714 (US)

(74) Representative: Wegner, Hans
Bardehle Pagenberg Partnerschaft mbB
Patentanwälte, Rechtsanwälte
Prinzregentenplatz 7
81675 München (DE)

Remarks:
This application was filed on 11-08-2015 as a divisional application to the application mentioned under INID code 62.

(54) **REDUCING POWER CONSUMPTION IN WIRELESS NETWORK STATIONS BY OPTIMIZING CONTENTION PERIOD OVERHEAD WITH STATION GROUPING, PROXY CSMA, AND TIM MONITORING**

(57) A method of saving power in a wireless network can include determining a plurality of stations associated with an AP. The AP can create station groups using group selection logic. Notably, the group selection logic is transparent to the plurality of stations. A plurality of TIMs can then be sent, each TIM allowing only one station group access to a channel during a predetermined time interval, such as a beacon interval. In another method, a station can determine its sleep duration based on at least one of first information from the TIM to generate random sleep duration, second information regarding previous operation of the station, and third information regarding a status of the station. The first, second, and third information can include the number of stations associated with the AP and having buffered data based on the TIM, historical collisions, and power status.

700

Receive beacon and TIM
701

Determine sleep duration of station based on at least one of first information from the TIM, second information regarding operation of the station, and third information regarding a status of the station
702

First information: number of stations associated with AP
702A

Second information: historical collisions of station
702B

Third information: power status of station
702C

FIG. 7

EP 2 963 981 A1

## Description

RELATED APPLICATIONS

This application claims priority of U.S. Provisional Patent Application 61/560,778, entitled "Reducing Power Consumption In Wireless Network Stations By Optimizing Contention Period Overhead With Station Grouping And Proxy CSMA" filed November 16, 2011.

BACKGROUND OF THE INVENTION

The present invention relates to reducing power consumption in wireless networks and in particular to providing such power consumption by optimizing contention period overhead with station grouping, proxy CSMA, and TIM monitoring.

RELATED ART

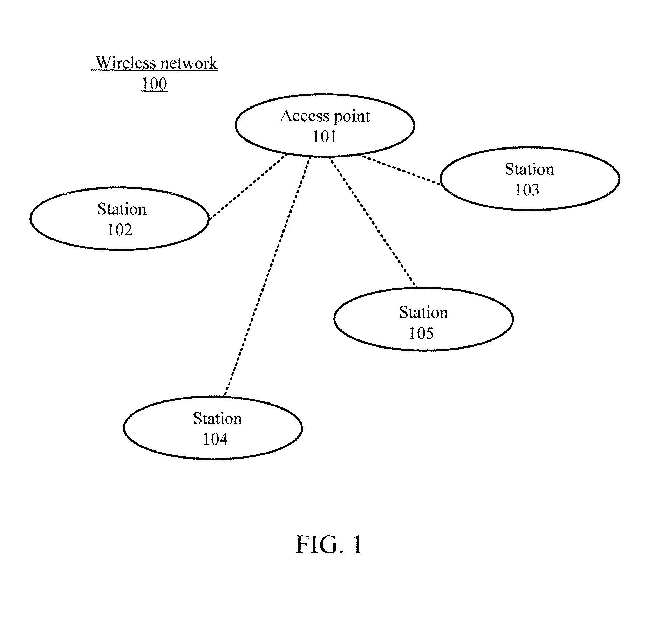

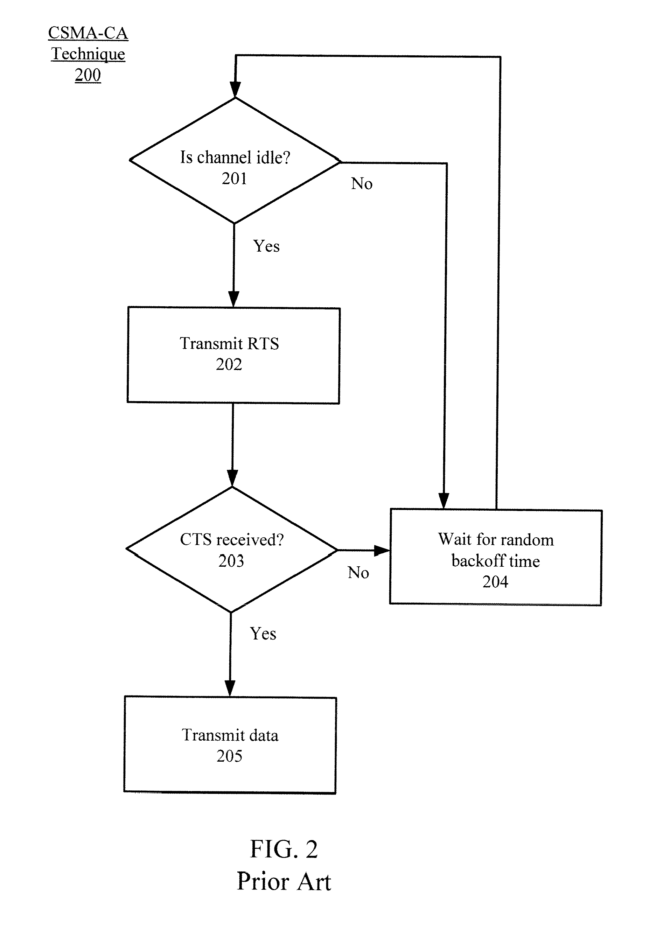

FIG. 1 illustrates an exemplary wireless network 100 including an access point (AP) 101 and a plurality of wireless stations (also called stations herein) 102-105. In one embodiment, wireless network 100 can operate in accordance with one of the IEEE 802.11 standards. One 802.11 technique is carrier sense multiple access with collision avoidance (CSMA-CA). FIG. 2 illustrates a CSMA-CA technique 200. In technique 200, a node (e.g. one of stations 102-105, FIG. 1) that wants to transmit data has to listen to the channel and determine in step 201 whether or not another node is transmitting on the channel, i.e. whether the channel is idle. If the channel is idle, then the node can begin the transmission process. Specifically, the node can send a request-to-send (RTS) packet in step 202, and assuming that a clear-to-send (CTS) packet is received from the desired receiver node in step 203, then the transmitter node can begin to transmit in step 205. However, if the channel is being used (step 201) or if a CTS packet is not received (step 203), then the transmitter node must wait for a randomly-determined period of time (step 204), which is called a back-off time, before returning to step 201 of checking whether the channel is idle.

Also according to 802.11 standards, an AP periodically sends a traffic indication map (TIM) in its beacon to identify which stations in a power save mode have buffered frames in the AP. The TIM has a plurality of bits (e.g. 2008 bits), each bit corresponding to a particular association identification (AID). Note that an AID is assigned when the station associates with the AP (as used herein the term AID may also refer to its respective station). All stations in a power save mode must wake up to receive this beacon to determine whether their bit is set (which indicates that buffered data is available for the station in the AP).

The random back-off procedure of CSMA-CA is a necessary overhead. But for power-saving stations awakened by TIM notification, this overhead takes a toll on their power consumption due to increase in the awake time caused by contention resolution, random back-off, subsequent collisions, and re-trying.

Notably, the AP sends the TIM notification to all associated stations. As a result, all the awakened stations having buffered data attempt to win the channel at substantially the same time, but only one wins. For the remaining unsuccessful stations, the entire attempt was a waste of power. Unfortunately, as the number of stations associated with the AP increases, the number of station collisions and the amount of power wasted due to failed attempts increases.

Indeed, the highest contributor of station standby power is during the AWAKE_INTERVAL, which begins when the AP informs the station of available buffered data (as indicated by the appropriate bit of the TIM being set) to the station until the station finally wins use of the channel. Therefore, the AWAKE_INTERVAL is representative of the entire duration the station is not in a power-save mode. Notably, the standby power contribution has a direct correlation to the number of stations associated with the AP.

Therefore, a need arises for a technique that reduces the probability of collision, shortens the contention window, and creates a shorter AWAKE_INTERVAL.

BRIEF DESCRIPTION OF THE DRAWINGS

FIG. 1 illustrates an exemplary wireless network including an access point (AP) and a plurality of wireless stations.
FIG. 2 illustrates a known CSMA-CA technique.
FIG. 3 illustrates a technique that can reduce the probability of collision, shorten the contention window, and create shorter AWAKE_INTERVALs in a wireless network.
FIG. 4 illustrates exemplary group selection logic for a wireless network.
FIG. 5 illustrates an exemplary technique including a second level proxy CSMA.
FIG. 6 illustrates an exemplary beacon and TIM transmission timeline.
FIG. 7 illustrates an exemplary technique implemented by a station for reducing the probability of collision within a contention window.
FIG. 8 illustrates an exemplary electronic device configured to perform one of the techniques described herein.

SUMMARY

A method of saving power in a wireless network is described. In this method, a plurality of stations associated with an access point (AP) can be determined. Station groups can be created from the plurality of stations using group selection logic. Notably, the group selection logic is transparent to the plurality of stations. A plurality of traffic indication maps (TIMs) can then be sent, each TIM allowing only one station group access to a channel during a predetermined time interval, such as a beacon interval.

In one embodiment, the group selection logic can include a modulo-N operation based on a predetermined number N of station groups. The number of station groups can be configurable in the AP. In another embodiment, the group selection logic can include a computational technique implemented by the AP to provide a randomized selection of association IDs divided between the station groups. In yet other embodiments, the group selection logic can be based on subscription levels, home-usage designations, or received signal strength indication (RSSI) range rings.

The method can further include creating station stagger using station selection logic. In this case, a beacon including the TIM can further include station stagger information to indicate station receiving order. The station selection logic can be based on a data rate and an amount of buffered data in the AP for each station in a selected station group having access to the channel. The station stagger information can include time offsets associated with the station receiving order. A final selection of an ordered subset can include $\sum_{k=1}^{N_r} \dfrac{N_r!}{(N_r - k)!}$ possibili-

ties, which minimizes channel idle time, delay time of priority data classes, retransmission efforts, or a combination thereof.

A method of saving power in a first station operable in the wireless communication network is also described. In this method, a beacon from an access point (AP) can be received. This beacon includes a traffic indication map (TIM). A sleep duration of the first station can be determined based on at least one of first information from the TIM to generate a random sleep duration, second information regarding previous operation of the first station, and third information regarding a status of the first station.

In one embodiment, determining the sleep duration can include determining a number of stations associated with the AP and having buffered data based on the TIM, the first information including the number of stations. In one embodiment, a beacon interval can be divided into a number of slices, wherein the number of slices is equal to the number of stations. A slice for a wake up can then be arbitrarily picked. In another embodiment, the number of stations associated with the AP and having buffered data based on the TIM can be determined, the first information including the number of stations. A beacon interval can be divided into a first number of slices based on a fixed time duration for each slice. A number and slice composition of overlapping sets of slices can be determined. One set of slices can be chosen based on the number of stations. The station can then arbitrarily pick a slice of the one set for its wake up.

In one embodiment, determining the sleep duration can include reviewing historical collisions of the first station, wherein the second information includes the historical collisions. In another embodiment, determining the random sleep duration can include assessing a power status of the first station, wherein the third information includes the power status. In yet another embodiment, determining the sleep duration can include a multiple types of information, e.g. the second and third information.

An access point (AP) is also described. This AP can include a non-transitory medium storing executable instructions for saving power in the wireless network. When the instructions are executed, the AP can perform certain of the described steps. A first station is also described. This first station can include a non-transitory medium storing executable instructions for saving power in the wireless network. When the instructions are executed, the first station can perform certain of the described steps. A non-transitory computer-readable medium storing instructions for saving power in a wireless network is also described. When the instructions are executed, a processor can perform the steps described above. A wireless network including an AP and a plurality of stations associated with the AP is described. The AP includes a non-transitory medium storing executable instructions for saving power in the wireless network. When the instructions are executed, the AP can perform the described steps. An electronic device including a processor block and a communication block in operative relation to the processor block is also described. The communication block can be configured to perform the described steps.

## DETAILED DESCRIPTION OF THE DRAWINGS

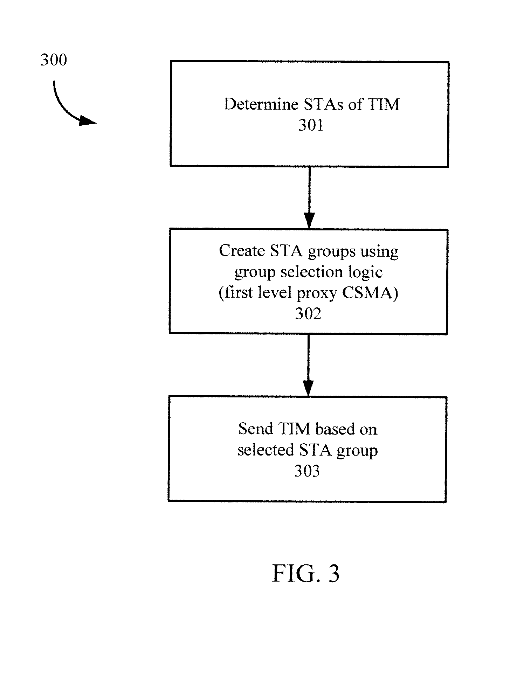

FIG. 3 illustrates a technique 300 that can reduce the probability of collision, shorten the contention window, and create shorter AWAKE_INTERVALs in a wireless network. In technique 300, the AP can determine its associated stations in step 301. As indicated above, the AP assigns each associated station an AID and a corresponding bit in the TIM, which can be set when that station has buffered data in the AP. In step 302, the AP can create a plurality of station groups (also called TIM notification groups herein) using predetermined group selection logic. In one embodiment, the number N of station groups is configurable in the AP.

Notably, this group selection logic can be transparent to the plurality of stations. That is, forming the groups by the AP can be done autonomously from the stations. Specifically, the formation of these groups can be done without input from the stations or special messages/signals sent to the stations.

The group selection logic can vary based on the AP and/or the wireless network. In one embodiment, the group selection logic can be an algorithm, such as simple modulo-N logic or some other computational technique implemented by the AP to provide a randomized selection of the AIDs for the N groups.

For example, assume the following associated stations with AIDs {10, 11, 12, 13, 14, 15, 16, 17, 18, 19, 20, 21, 22} are in a power save mode. Further assume that the AP has buffered data for the stations with AIDs {10, 11, 12, 13, 14, 15, 16, 17, 18}. In step 303, the AP, instead of setting the bits for AIDs {10, 11, 12, 13, 14, 15, 16, 17, 18} in the TIM at same time, triggers a proxy CSMA.

This proxy CSMA can be characterized as a first level contention resolution. For example, with N=3 and using simple modulo-N logic, the AP can generate the following groups: Group_ID=0{12, 15, 18}, Group_ID=1{10, 13, 16}, and Group_ID=2{11, 14, 17}. In accordance with one aspect of this first level proxy CSMA, the AP selects one of the N groups, which allows only the stations of that group to contend for the channel at that point in time. Note that this selection determines which group "wins" the channel, and therefore which stations will have the opportunity to use the channel at that point in time. Assuming that Group_ID=o is the first group that wins (with Group_ID=1 and Group_ID=2 being later, successive winners), only three stations with AIDs {12, 15, 18} can contend for the channel.

In another embodiment, with respect to creating the groups for first level proxy CSMA, groups that may include stations not having buffered data can be created. For example, Group_ID=o could include {12, 15, 18}, wherein {12, 15} have buffered data, but {18} does not have buffered data. In this case, the AP can perform another level of classification to determine which stations in the selected group have buffered data before generating the TIM, which as indicted above sets bits only for the stations having buffered data.

In step 303, the AP can set the appropriate bits of its TIM based on the selected group. Note that depending on the value of N, which affects the number of stations in each group, each group still comprises only stations having buffered data. In contrast, in accordance with a standard CSMA technique, all eight stations (i.e. AIDs {10, 11, 12, 13, 14, 15, 16, 17, 18}) having buffered data would contend for the one channel. Therefore, the above-described technique 300 can advantageously decrease the probability of collision as well as the channel silence period, thereby improving overall channel usage. Note that all associated stations must wake up to receive the TIM, but only those stations with AIDs having set bits in the TIM must stay awake - all other stations can immediately return to a power save mode. In one embodiment, steps 301-303 can be performed for each beacon. That is, the AP can generate new groups for each beacon interval, wherein the station bits set in the TIM are those stations that have buffered data and have not been serviced in the prior beacon interval. Thus, the stations in this embodiment are changing dynamically for each beacon interval. In another embodiment, the AP can use the created groups to continue servicing stations having buffered data until all stations in the created groups have been serviced. For example, assuming that only the station having AID {12} is serviced during a first beacon interval, then during the second beacon interval the AP can proceed to service the station with AIDs {15, 18} (Group_ID=o) and then proceed to service the station with AID {10} (Group_ID=1) etc. as time permits for each beacon interval. Thus, this type of round-robin scheduling can include both intra-group and inter-group scheduling aspects.

In one embodiment, the first level proxy CSMA can be AP-only implemented. Notably, no change in the 802.11 standards is needed if technique 300 is limited to the first level proxy CSMA. Specifically, the AP sets the TIM notification only for the stations having buffered data that are members of the winning group. The notified stations can then contend for the channel in a manner specified by the 802.11 standards.

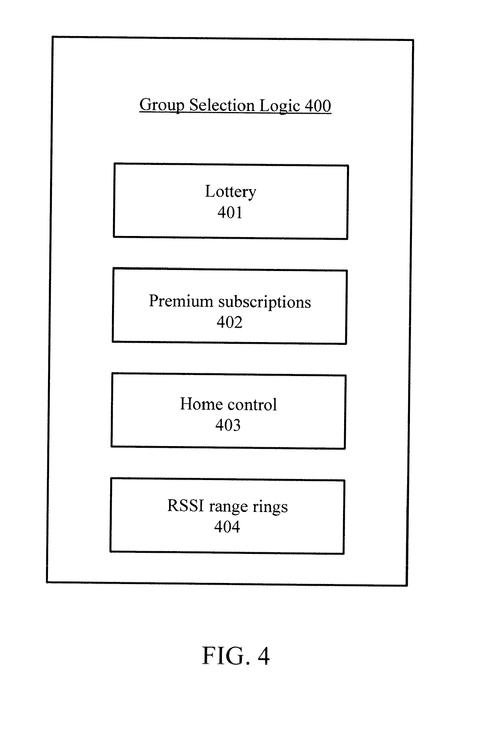

FIG. 4 illustrates exemplary group selection logic for a wireless network. As noted above, the group selection logic can provide a random un-biased winner, i.e. effectively a lottery 401. In another embodiment, the group selection logic can be based on premium subscriptions 402, whereby a specific group, say Group_ID=0, is scheduled preferentially over the other groups and the other groups are then subjected to a traditional round-robin scheduling or any other scheduling befitting the application environment. For example, the AID assignment in the AP can ensure that Group_ID=o is a high priority group reserved for stations with premium data policies. In other words, the stations having premium subscriptions can be assigned AIDs associated with a priority Group_ID (e.g. Group_ID=o in the above example). This assignment can ensure that the stations having premium subscriptions get scheduled first to receive their buffered data compared to other stations having non-premium subscriptions. The advantage this provides over standard 802.11 procedure is by decoupling the stations with lesser-valued plan from the medium access while a higher valued plan station gets serviced; in the process, the channel contention is reduced and power is saved across the overall system. A typical deployment for such a procedure could be, but not limited to, the mobile Wi-Fi™ hot-spots where a cellular subscriber data pipe is offloaded into one of the hot-spots and the data plan, and any premium associated with the cellular data plan, is subsequently applied over the 802.11 data pipe.

In yet another embodiment, the group selection logic technique can provide home control 403 of the stations. For example, the AIDs of stations used by minors of a household can be assigned to a low priority Group_ID. In contrast, those AIDs of stations used by the parents can be assigned to a high priority Group_ID. In another embodiment, stations within a home can be identified or designated based on use rather than users. For example, the AIDs of stations associated with Internet access and/or wireless music can be assigned to a higher priority Group_ID than AIDs of stations associated with game consoles. Thus, this embodiment can optimize wireless medium usage inside a home and provide bandwidth control, at the same time not penalizing the other stations from a power standpoint.

In yet another embodiment, the group selection logic technique can be based on the RSSI (received signal strength indication) range rings 404. For example, based on a last known RSSI of each station, the AP can determine the approximate distance of the station from the AP. A station farther away from the AP will typically require more re-transmissions and/or a lower data rate (i.e. a lower PHY rate). Thus, a station farther away from the AP will typically take longer to service. In one embodiment, a plurality of RSSI range rings (with the AP in the center) can be defined based on the last RSSI sampled before the stations went into a power save mode. The stations in the ring(s) closest to the AP can be given higher priority in the group selection than those farther from the AP. For example, a first predetermined number of stations in one or more rings closest to the AP can be treated preferentially (i.e. their AIDs assigned to a priority Group_ID) compared to a second predetermined number of station in one or more rings farther from the AP. Note that this RSSI range ring technique can be used in conjunction with the 802.11 Fast Link Adaptation. Specifically, the RSSI range ring technique merely adds another dimension to the group selection logic during the power save mode. In one embodiment, the RSSI range ring technique can be dynamic in nature with constant learning and correction of the last-known RSSI with a more recently acquired value.

In accordance with another embodiment of an improved CSMA-CA technique, the AP can also perform a second level proxy CSMA technique in which the AP can effectively identify the winning station of the notified Group_ID by triggering the CSMA recursively until reduced to the final winner. By doing so, the contention probability drops down to 0 and the system assumes a completely AP-scheduled mode of operation. While the recursive CSMA can be implemented with a variety of selection algorithms, as indicated in the above embodiments, a completely randomized lottery can be used, where a completely AP-scheduled mode is in effect, to ensure the essence of CSMA-CA is upheld. Therefore, as noted above, only one station within the AIDs {12, 15, 18} will emerge as the winner, say, AID {12}, and will be contending for the channel to receive its buffered data. While such a method does optimize the system to have zero probability of collision, it may not be the most optimal in all scenarios and can lead to dead air time. For example, the chosen station can get serviced by the AP earlier than the next Target Beacon Transmission Time (TBTT), thereby leaving a gap in channel where no other station gets serviced. This problem, however, can be remedied by using rate-controlled second level proxy CSMA.

Instead of selecting one final winning station from a recursive proxy-CSMA, a smaller ordered subset can be selected, i.e. {(12), (15), (18), (12, 15), (15, 12), (12, 18), (18, 12), (15, 18), (18, 15), (12, 15, 18), (12, 18, 15), (15, 12, 18), (15, 18, 12), (18, 12, 15), (18, 15, 12)}, of stations within the winning group, selected and ordered in a way such as to minimize the dead air-time. Such a selection can be achieved by coupling the 2nd level proxy CSMA with rate-control logic.

Specifically, in one embodiment, station selection logic can be based on the amount of buffered data to be transmitted and the data rate of the station, thereby allowing the AP to determine what percentage of the beacon interval (which is typically 100 ms) will be taken by each station in receiving its buffered data (as measured in time units or % of the beacon interval). In one embodiment, stations requiring more time units are given higher priority than stations using fewer time units.

In one embodiment, the rate-controlled 2nd level proxy CSMA can be reduced to a single station selection, if the data associated with the station is sufficient to use up one whole beacon interval. In another embodiment, all the stations in the group may be accommodated within one beacon interval because their buffered data can all be transmitted within one beacon interval. In this embodiment, the stations can be ordered based on (i) internal priority of associated data, for example the station with AID {12} may have buffered data in AC_BE (access category best effort) category, while the station with AID {15} may have buffered data in AC_BK (access category background data) category, (ii) last known RSSI, (iii) time to completion, or any other classification known to those skilled in the art. In one embodiment, the final ordered subset selection can be reduced into a multi-dimensional constrained optimization problem to select the right subset from the possible $\sum_{k=1}^{N_r} \frac{N_r!}{(N_r-k)!}$ combinations, where $N_r$ represents the number of stations within the winning group of stations having buffered data. Thus, for the example Group_ID=o with $N_r$=3 (assuming station with AID {18} is included), 3 + 6 + 6 = 15 possible station combinations exist. Those skilled in the art can define an optimization problem with the right set of tradeoffs to arrive at an optimal selection, befitting the needs of the wireless application. Note that any subset selected that does not include all the $N_r$ stations would have one or more stations of the winning group (i.e. with buffered data) that are not serviced immediately and potentially marked for delivery in the next beacon period. In one embodiment, the left-over stations from the previous beacon interval can be automatic candidates for the next beacon interval under the assumption that the previous winning group has not been catered to yet. In another embodiment, the left-over stations can be subjected again to a group selection logic process.

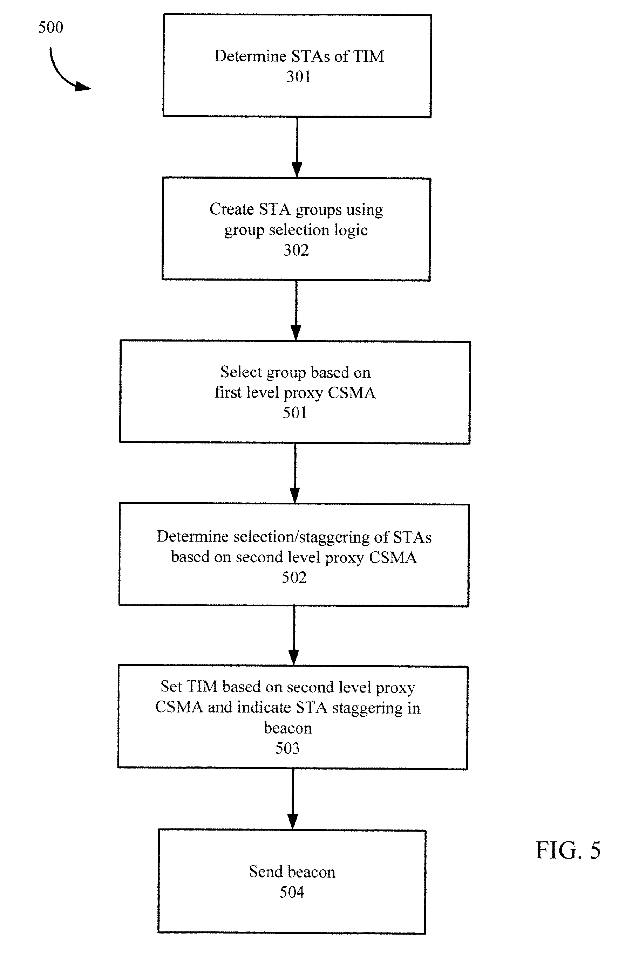

FIG. 5 illustrates an exemplary technique 500 including a second level proxy CSMA. In technique 500, steps 301 and 302 can be performed (as explained above in reference to FIG. 3). After the station groups have been created, the AP can select the winning group using one of the above-described first level proxy CSMA techniques (step 501). In step 502, the AP can determine the selection (for a single station per beacon interval) or the staggering of the stations (for multiple stations per beacon interval) based on the second level proxy CSMA technique. In step 503, the AP can set the TIM based on the second level proxy CSMA and also indicate the station staggering, if appropriate for the second level proxy CSMA technique, in the beacon. In step 504, the AP can send the beacon with the TIM and staggering information (if included).

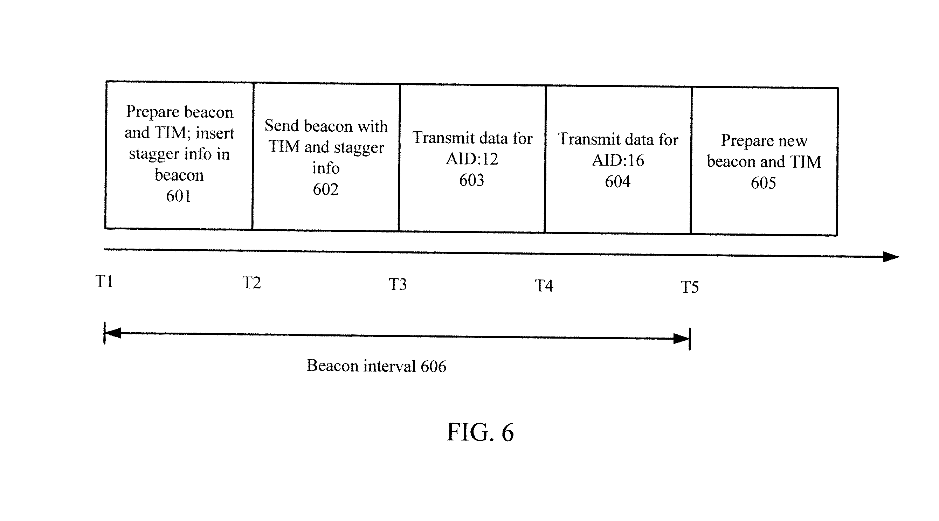

Referring back to the above example and referring to FIG. 6, the AP can prepare a beacon including a TIM at time T1 (step 601). Notably, the TIM can include the above-described first level proxy CSMA and the beacon can further include the second level proxy CSMA for providing staggered reception for the station, which allows for a micro-sleep mechanism for the notified stations. The staggering information can be exchanged by using a dedicated Information Element (IE) within the beacon. To prepare the second level proxy CSMA, the AP can check the buffered data and data rates for both stations with AIDs {12, 15}, assuming that the ordered subset (12, 18) was the outcome of the constrained optimization algorithm, delineated above. Assume that the station with AID 12 will use 60% of the beacon interval and the station with AID 15 will use 40% of the beacon interval. In this case and using the above-described station selection logic, the AP can insert the appropriate station stagger reception IE in the beacon. At time $T_2$, the AP can send the beacon, which includes the TIM as well as the stagger information.

In one embodiment, this stagger information will indicate that the station with AID 12 will have access to the channel at time T3, or immediate reception, for receiving its buffered data (transmitted by the AP in step 603). Moreover, this stagger information can indicate when the station with AID 15 must wake up (i.e. at time T4) for its buffered data (transmitted by the AP in step 604). For example, the AP can indicate the receive offset for station 15 in predetermined time units, thereby allowing station 15 to return to a "micro-sleep" mode until it needs to wake up (e.g. immediately preceding its data window at time T4). In the example above, the station with AID 15 can be in a micro-sleep mode for 60% of the beacon interval, thereby providing considerable power savings to station with AID 15. Because the AP is actually resolving the priority of the stations within the selected Group_ID, this second level proxy CSMA can be used to eliminate contention overhead (i.e. provide a second level contention resolution, see step 303, FIG. 3). At time T5, i.e. the end of a beacon interval, the AP can begin preparing a new beacon (step 605) and associated TIM (i.e. repeating steps 601-604). In one of the preferred embodiments, the left-over station with AID {18} of winning Group_ID=0, can now be scheduled immediately in this next interval. In yet another embodiment, it can be subjected a group selection again and if Group_ID=0 wins, then the station with AID {18} can be scheduled. As newer stations may have been added to the Group_ID=0 at this interval, in one preferred embodiment the station with AID {18} can get preferential treatment due to its aging profile. In another embodiment, all the stations are subjected to the constrained optimization yet again.

In one embodiment, the instructions for staggered receive for the stations having buffered data in the selected Group_ID can be provided in a currently-undesignated field of the beacon. In this embodiment, the above-described second level proxy CSMA requires a MAC frame format that is known by the AP and the stations associated with the AP.

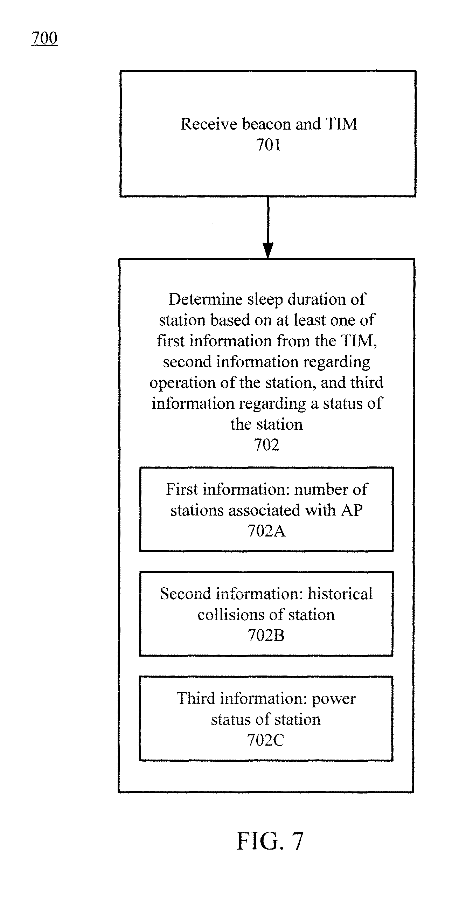

As described above, the AP can perform various techniques to save power. These techniques can be transparent to the stations associated with the AP. In accordance with another embodiment shown in FIG. 7, an exemplary power saving technique 700 can be implemented by a station using TIM monitoring. Step 701 can receive the beacon and TIM from the AP. Step 702 can determine a sleep duration based on at least one of first information from the TIM, second information regarding the operation of the station, and third information regarding a status of the station.

In one embodiment, determining the sleep duration can include determining a number of stations associated with the AP and having buffered data, as determined by the TIM (and thus those stations that will be contending for the channel), wherein the first information includes the number of stations. In one embodiment, if any other stations are contending for the channel, then the station can divide the beacon interval into N slices, and then randomly choose a slice in which to wake up and poll the data from the AP. In one embodiment, the number of slices N is determined by the number of stations (e.g., N = the number of stations). In another embodiment, each slice can represent a predetermined time duration. This slicing can be set by protocol, the AP, or the station in various embodiments.

In general, each beacon interval can include P slices. In this embodiment, overlapping sets of slices can be formed from the P slices. One slice can include the P slices, while all other sets include less than P slices. For example, one embodiment can include three sets: a first set with 5 slices, a second set with 10 slices (overlapping the first set), and a third set with 20 slices (overlapping the first and second sets)(wherein P=20). In this example, the second set includes all the slices of the first set, i.e. a complete overlap, plus 5 additional slices. Similarly, in this example, the third set includes all the slices of the second set, i.e. a complete overlap, plus 10 additional slices. In other embodiments, the overlap between sets can be partial. In one embodiment, the slices are time consecutive slices, but in other embodiments, the slices need not be consecutive slices.

In the described embodiment, the station can randomly choose a slice from one of the first, second, and third sets of slices, the set of slices chosen based on the number of stations. For example, if the number of stations is less than 5, then the station can randomly chose a slice from the first set. If the number of stations is greater than 5, but less than 10, then the station can randomly chose a slice from the second set. If the number of stations is greater than 10, but less than 20, then the station can randomly chose a slice from the third set. Although three sets of slices are described above, any number of sets can be created as well as the time duration for each slice.

In another embodiment, determining the sleep duration can include reviewing historical collision data of the station, wherein the second information includes historical collision data. That is, if the station has experienced a predetermined number of collisions within a predetermined period of time, then the station may schedule its wake up for a sooner or later wake up. For example, if the station has repeatedly experienced collisions when scheduling wake ups in sooner slices (e.g. the last M wake ups with an average sleep duration D), then the station may schedule its next wake up for a later wake up, e.g. D + D1, wherein D1 is a predetermined time period.

In yet another embodiment, determining the sleep duration can include assessing the power status of the station, wherein the third information includes the power status. For example, if the battery in the station is low, then the station can set its sleep duration to be shorter rather than longer to improve its chances of receiving the data. In yet another embodiment, step 702 can take into account multiple types of information (e.g. historical collision data and power status) to determine its sleep duration.

Certain aspects of the power saving techniques 300, 500, 700 described in Figures 3, 5, and 7, respectively, may take the form of an entirely software embodiment (including firmware, resident software, micro-code, etc.) or an embodiment combining software and hardware aspects that may all generally be referred to herein as a "circuit," "module" or "system." Furthermore, embodiments of the inventive subject matter may take the form of a computer program product embodied in any tangible medium of expression having computer usable program code embodied in the medium. The described embodiments may be provided as a computer program product, or software, that may include a machine-readable medium having stored thereon instructions, which may be used to program a computer system (or other electronic device(s)) to perform a process according to embodiments, whether presently described or not. A machine-readable medium includes any mechanism for storing ("machine-readable storage medium") or transmitting ("machine-readable signal medium") information in a form (e.g., software, processing application) readable by a machine (e.g., a computer). The machine-readable storage medium may include, but is not limited to, magnetic storage medium (e.g., floppy diskette); optical storage medium (e.g., CD-ROM); magneto-optical storage medium; read only memory (ROM); random access memory (RAM); erasable programmable memory (e.g., EPROM and EEPROM); flash memory; or other types of medium suitable for storing electronic instructions (e.g., executable by one or more processing units). In addition, machine-readable signal medium embodiments may be embodied in an electrical, optical, acoustical or other form of propagated signal (e.g., carrier waves, infrared signals, digital signals, etc.), or wireline, wireless, or other communications medium.

Computer program code for carrying out operations of the embodiments may be written in any combination of one or more programming languages, including an object oriented programming language such as Java, Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN), a personal area network (PAN), or a wide area network (WAN), or the connection may be made to an external computer (for example, through the Internet using an Internet Service Provider).

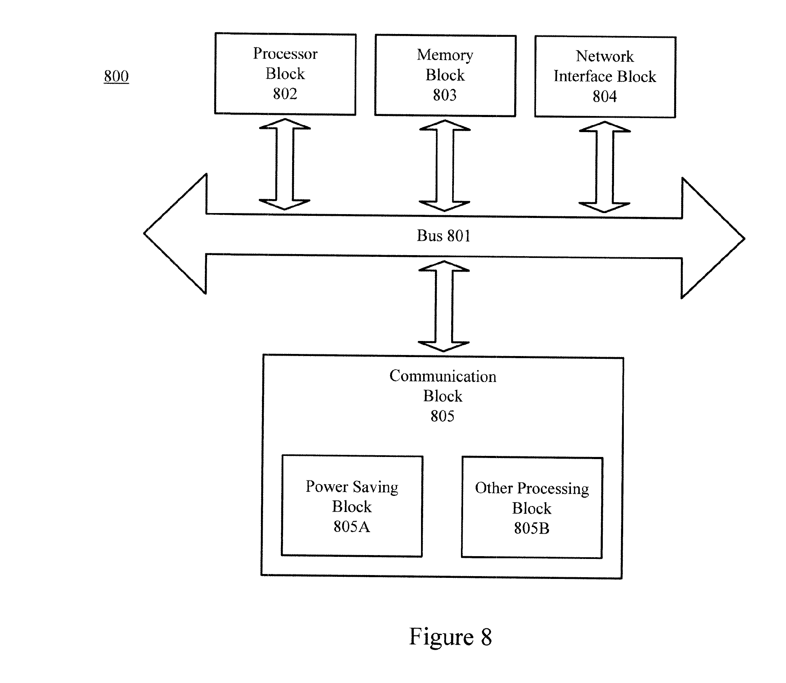

Although the power saving techniques are described as being performed by an AP or a station, an electronic device having wireless capability typically includes certain components that may or may not be characterized as part of an AP or a station. Indeed, in some embodiments, certain components of the electronic device may be characterized as outside the AP or station, but still assist in one or more steps of the data scheduling technique. Figure 8 illustrates a simplified electronic device 800 including a power saving block 805A, which can substantially perform at least one of the power saving techniques 300, 500, and 700. The electronic device 800 may be a notebook computer, a desktop computer, a tablet computer, a netbook, a mobile phone, a gaming console, a personal digital assistant (PDA), or other electronic system having wireless (and wired, in some cases) communication capabilities.

The electronic device 800 can include a processor block 802 (possibly including multiple processors, multiple cores, multiple nodes, and/or implementing multi-threading, etc.). The electronic device 800 can also include a memory block 803, which may include cache, SRAM, DRAM, zero capacitor RAM, Twin Transistor RAM, eDRAM, EDO RAM, DDR RAM, EEPROM, NRAM, RRAM, SONOS, PRAM, and/or another type of memory cell array. The electronic device 800 also includes a network interface block 804, which may include at least a WLAN 802.11 interface. Other network interfaces may include a Bluetooth interface, a WiMAX interface, a Zig-Bee® interface, a Wireless USB interface, and/or a wired network interface (such as an Ethernet interface, or a powerline communication interface, etc.). The processor block 802, the memory block 803, and the network interface block 804 are coupled to a bus 801, which may be implemented in accordance with PCI, ISA, PCI-Express, HyperTransport®, InfiniBand®, NuBus, AHB, AXI, or another bus standard.

The electronic device 800 also includes a communication block 805, which can include a power saving block 805A for implementing one of the above-described techniques and another processing block 805B. The other processing block 805B may include, but is not limited to, portions of a transceiver for processing received signals, for processing to be transmitted signals, and for coordinating actions of the receiver and transmitter portions. Other embodiments may include fewer or additional components not illustrated in FIG. 8, such as video cards, audio cards, additional network interfaces, and/or peripheral devices. In one embodiment, the memory block 803 may be connected directly to the processor block 802 to increase system processing.

The above description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

In the following, further examples are described to facilitate the understanding of the invention:

1. A method of saving power in a wireless network, the method comprising:

determining a plurality of stations associated with an access point (AP);
creating station groups from the plurality of stations using group selection logic, the group selection logic being transparent to the plurality of stations; and
sending a plurality of traffic indication maps (TIMs), each TIM allowing only one station group access to a channel during a predetermined time interval.

2. The method of example 1, wherein the group selection logic includes a modulo-N operation based on a predetermined number N of station groups.

3. The method of example 1, wherein a number of station groups is configurable in the AP.

4. The method of example 1, wherein the group selection logic includes a modulo-N operation.

5. The method of example 1, wherein the group selection logic includes a computational technique implemented by the AP to provide a randomized selection of association IDs divided between the station groups.

6. The method of example 1, wherein the group selection logic is based on subscription levels.

7. The method of example 1, wherein the group selection logic is based on home-usage designations.

8. The method of example 1, wherein the group selection logic is based on received signal strength indication (RSSI) range rings.

9. The method of example 1, wherein the predetermined time interval is a beacon interval.

10. The method of example 1, further comprising:

creating station stagger using station selection logic, wherein a beacon including the TIM further includes station stagger information to indicate station receiving order.

11. The method of example 10, wherein the station selection logic is based on a data rate and an amount of buffered data in the AP for each station in a selected station group having access to the channel.

12. The method of example 10, wherein the station stagger information includes time offsets associated with the station receiving order.

13. The method of example 10, where a final selection of an ordered subset including $\sum_{k=1}^{N_r} \dfrac{N_r!}{(N_r - k)!}$ possibilities, minimizes one of: channel idle time, delay time of priority data classes, retransmission efforts, and a combination thereof.

14. An access point (AP) comprising:

a non-transitory medium storing executable instructions for saving power in a wireless network, which when executed by the AP perform steps comprising:

determining a plurality of stations associated with the AP;
creating station groups from the plurality of stations using group selection logic, the group selection logic being transparent to the plurality of stations; and

sending a plurality of traffic indication maps (TIMs), each TIM allowing only one station group access to a channel during a predetermined time interval.

15. The AP of example 13, wherein the group selection logic includes a modulo-N operation based on a predetermined number of station groups.

16. The AP of example 13, wherein a number of station groups is configurable in the AP.

17. The AP of example 13, wherein the group selection logic includes a modulo-N operation based on a predetermined number of station groups.

18. The AP of example 13, wherein the group selection logic includes a computational technique implemented by the AP to provide a randomized selection of association IDs divided between the station groups.

19. The AP of example 13, wherein the group selection logic is based on subscription levels.

20. The AP of example 13, wherein the group selection logic is based on home-usage designations.

21. The AP of example 13, wherein the group selection logic is based on received signal strength indication (RSSI) range rings.

22. The AP of example 13, wherein the predetermined time interval is a beacon interval.

23. The AP of example 13, further comprising:

creating station stagger using station selection logic, wherein a beacon including the TIM further includes station stagger information to indicate station receiving order.

24. The AP of example 22, wherein the station selection logic is based on a data rate and an amount of buffered data in the AP for each station in a selected station group having access to the channel.

25. The AP of example 22, wherein the station stagger information includes time offsets associated with the station receiving order.

26. A non-transitory computer-readable medium storing instructions for saving power in a wireless network, the instructions when executed by a processor perform steps comprising:

determining a plurality of stations associated with an access point (AP);

creating station groups from the plurality of stations using group selection logic, the group selection logic being transparent to the plurality of stations; and

sending a plurality of traffic indication maps (TIMs), each TIM allowing only one station group access to a channel during a predetermined time interval.

27. The computer-readable medium of example 26, wherein the group selection logic includes a modulo-N operation based on a predetermined number N of station groups.

28. The computer-readable medium of example 26, wherein a number of station groups is configurable in the AP.

29. The computer-readable medium of example 26, wherein the group selection logic includes a modulo-N operation based on a predetermined number of station groups.

30. The computer-readable medium of example 26, wherein the group selection logic includes a computational technique implemented by the AP to provide a randomized selection of association IDs divided between the station groups.

31. The computer-readable medium of example 26, wherein the group selection logic is based on subscription levels.

32. The computer-readable medium of example 26, wherein the group selection logic is based on home-usage designations.

33. The computer-readable medium of example 26, wherein the group selection logic is based on received signal strength indication (RSSI) range rings.

34. The computer-readable medium of example 26, wherein the predetermined time interval is a beacon interval.

35. The computer-readable medium of example 26, further comprising:

creating station stagger using station selection logic, wherein a beacon including the TIM further includes station stagger information to indicate station receiving order.

36. The computer-readable medium of example 35, wherein the station selection logic is based on a data rate and an amount of buffered data in the AP for each station in a selected station group having access to the channel.

37. The computer-readable medium of example 35, wherein the station stagger information includes time offsets associated with the station receiving order.

38. The computer-readable medium of example 35, where a final selection of an ordered subset including

$$\sum_{k=1}^{N_r} \frac{N_r!}{(N_r - k)!}$$ possibilities, minimizes one of:

channel idle time, delay time of priority data classes, retransmission efforts, and a combination thereof.

39. A wireless network comprising:

  an access point (AP); and
  a plurality of stations associated with the AP, wherein the AP comprises:

    a non-transitory medium storing executable instructions for saving power in the wireless network, which when executed by the AP perform steps comprising:

      determining the plurality of stations;
      creating station groups from the plurality of stations using group selection logic, the group selection logic being transparent to the plurality of stations; and
      sending a plurality of traffic indication maps (TIMs), each TIM allowing only one station group access to a channel during a predetermined time interval.

40. An electronic device comprising:

  a processor block; and
  a communication block in operative relation to the processor block, the communication block being configured to perform steps comprising:

    determining a plurality of stations associated with an access point (AP);
    creating station groups from the plurality of stations using group selection logic, the group selection logic being transparent to the plurality of stations; and
    sending a plurality of traffic indication maps (TIMs), each TIM allowing only one station group access to a channel during a predetermined time interval.

41. The electronic device of example 40, wherein the group selection logic includes a modulo-N operation based on a predetermined number N of station groups.

42. The electronic device of example 40, wherein a number of station groups is configurable in the AP.

43. The electronic device of example 40, wherein the group selection logic includes a modulo-N operation based on a predetermined number of station groups.

44. The electronic device of example 40, wherein the group selection logic includes a computational technique implemented by the AP to provide a randomized selection of association IDs divided between the station groups.

45. The electronic device of example 40, wherein the group selection logic is based on subscription levels.

46. The electronic device of example 40, wherein the group selection logic is based on home-usage designations.

47. The electronic device of example 40, wherein the group selection logic is based on received signal strength indication (RSSI) range rings.

48. The electronic device of example 40, wherein the predetermined time interval is a beacon interval.

49. The electronic device of example 40, further comprising:

  creating station stagger using station selection logic, wherein a beacon including the TIM further includes station stagger information to indicate station receiving order.

50. The electronic device of example 49, wherein the station selection logic is based on a data rate and an amount of buffered data in the AP for each station in a selected station group having access to the channel.

51. The electronic device of example 49, wherein the station stagger information includes time offsets associated with the station receiving order.

52. The electronic device of example 49, where a final selection of an ordered subset including

$$\sum_{k=1}^{N_r} \frac{N_r!}{(N_r - k)!}$$ possibilities, minimizes one of:

channel idle time, delay time of priority data classes, retransmission efforts, and a combination thereof.

53. A method of saving power in a first station operable in a wireless communication network, the method comprising:

receiving a beacon from an access point (AP), the beacon including a traffic indication map (TIM);
determining a sleep duration of the first station based on at least one of first information from the TIM to generate a random sleep duration, second information regarding previous operation of the first station, and third information regarding a status of the first station; and.
waking up after the sleep duration to poll data frames.

54. The method of example 53, wherein determining the sleep duration includes:

determining a number of stations associated with the AP and having buffered data based on the TIM, the first information including the number of stations;
dividing a beacon interval into a number of slices, the number of slices being determined by the number of stations; and
arbitrarily picking a slice for a wake up.

55. The method of example 53, wherein determining the sleep duration includes:

determining a number of stations associated with the AP and having buffered data based on the TIM, the first information including the number of stations;
dividing a beacon interval into a first number of slices based on a fixed time duration for each slice;
determining a number and slice composition of overlapping sets of slices;
choosing one set of slices based on the number of stations; and
arbitrarily picking a slice within the one set for a wake up.

56. The method of example 53, wherein determining the sleep duration includes reviewing historical collisions of the first station, the second information including the historical collisions.

57. The method of example 53, wherein determining the sleep duration includes assessing a power status of the first station, the third information including the power status.

58. A first station for operation in a wireless communication network, the first station comprising:

a non-transitory medium storing executable instructions for saving power in the wireless communication network, which when executed by the first station perform steps comprising:

receiving a beacon from an access point (AP), the beacon including a traffic indication map (TIM); and
determining a sleep duration of the first station based on at least one of first information from the TIM to generate a random sleep duration, second information regarding previous operation of the first station, and third information regarding a status of the first station.

59. The first station of example 58, wherein determining the sleep duration includes:

determining a number of stations associated with the AP and having buffered data based on the TIM, the first information including the number of stations;
dividing a beacon interval into a number of slices, the number of slices being equal to the number of stations; and
arbitrarily picking a slice for a wake up.

60. The first station of example 58, wherein determining the sleep duration includes:

determining a number of stations associated with the AP and having buffered data based on the TIM, the first information including the number of stations;
dividing a beacon interval into a first number of slices based on a fixed time duration for each slice;
determining a number and slice composition of overlapping sets of slices;
choosing one set of slices based on the number of stations; and
arbitrarily picking a slice within the one set for a wake up.

61. The first station of example 58, wherein determining the sleep duration includes reviewing historical collisions of the first station, the second information including the historical collisions.

62. The first station of example 58, wherein determining the sleep duration includes assessing a power status of the first station, the third information including the power status.

63. A non-transitory computer-readable medium storing instructions for saving power in a wireless network, the instructions when executed by a processor perform steps comprising:

> receiving a beacon from an access point (AP), the beacon including a traffic indication map (TIM); and
> determining a sleep duration based on at least one of first information from the TIM to generate a random sleep duration, second information regarding previous operation of a first station, and third information regarding a status of the first station.

64. The computer-readable medium of example 63, wherein determining the sleep duration includes:

> determining a number of stations associated with the AP and having buffered data based on the TIM, the first information including the number of stations;
> dividing a beacon interval into a number of slices, the number of slices being equal to the number of stations; and
> arbitrarily picking a slice for a wake up.

65. The computer-readable medium of example 63, wherein determining the sleep duration includes:

> determining a number of stations associated with the AP and having buffered data based on the TIM, the first information including the number of stations;
> dividing a beacon interval into a first number of slices based on a fixed time duration for each slice;
> determining a number and slice composition of overlapping sets of slices;
> choosing one set of slices based on the number of stations; and
> arbitrarily picking a slice within the one set for a wake up.

66. The computer-readable medium of example 63, wherein determining the sleep duration includes reviewing historical collisions of the first station, the second information including the historical collisions.

67. The computer-readable medium of example 63, wherein determining the sleep duration includes assessing a power status of the first station, the third information including the power status.

68. An electronic device comprising:

> a processor block; and
> a communication block in operative relation to the processor block, the communication block being configured to perform steps comprising:

> receiving a beacon from an access point (AP), the beacon including a traffic indication map (TIM); and
> determining a sleep duration based on at least one of first information from the TIM to generate a random sleep duration, second information regarding previous operation of a first station, and third information regarding a status of the first station.

69. The electronic device of example 68, wherein determining the sleep duration includes:

> determining a number of stations associated with the AP and having buffered data based on the TIM, the first information including the number of stations;
> dividing a beacon interval into a number of slices, the number of slices being equal to the number of stations; and
> arbitrarily picking a slice for a wake up.

70. The electronic device of example 68, wherein determining the sleep duration includes:

> determining a number of stations associated with the AP and having buffered data based on the TIM, the first information including the number of stations;
> dividing a beacon interval into a first number of slices based on a fixed time duration for each slice;
> determining a number and slice composition of overlapping sets of slices;
> choosing one set of slices based on the number of stations; and
> arbitrarily picking a slice within the one set for a wake up.

71. The electronic device of example 68, wherein determining the sleep duration includes:

> determining a number of stations associated with the AP and having buffered data based on the TIM, the first information including the number of stations;
> dividing a beacon interval into a number of slices, the number of slices being equal to the number of stations; and
> when the number of stations is large, quasi-arbitrarily picking a later slice for a wake up.

**Claims**

1. A method of saving power in a station (102; 103; 104; 105) operable in a wireless communication network (100), the method comprising:

receiving a beacon from an access point, AP (101), the beacon including a traffic indication map, TIM;

determining a sleep duration of the station (102; 103; 104; 105) based on at least one of first information from the TIM to generate a random sleep duration, second information regarding previous operation of the station (102; 103; 104; 105), and third information regarding a status of the station (102; 103; 104; 105); and

waking up after the sleep duration to poll data frames.

2. The method of claim 1, wherein determining the sleep duration includes:

determining a number of stations (102; 103; 104; 105) associated with the AP and having buffered data based on the TIM, the first information including the number of stations (102; 103; 104; 105);

dividing a beacon interval (606) into a number of slices, the number of slices being determined by the number of stations (102; 103; 104; 105); and

arbitrarily picking a slice for a wake up.

3. The method of claim 1, wherein determining the sleep duration includes:

determining a number of stations (102; 103; 104; 105) associated with the AP and having buffered data based on the TIM, the first information including the number of stations (102; 103; 104; 105);

dividing a beacon interval (606) into a first number of slices based on a fixed time duration for each slice; and

arbitrarily picking a slice for a wake up.

4. The method of claim 1, wherein determining the sleep duration includes:

determining a number of stations (102; 103; 104; 105) associated with the AP and having buffered data based on the TIM, the first information including the number of stations (102; 103; 104; 105);

dividing a beacon interval (606) number of slices;

determining a number and slice composition of overlapping sets of slices;

choosing one set of slices from the overlapping sets of slices based on the number of stations (102; 103; 104; 105); and

arbitrarily picking a slice from the one set of slices for a wake up.

5. The method of claim 1, wherein determining the sleep duration includes reviewing historical collisions of the station (102; 103; 104; 105), the second information including the historical collisions.

6. The method of claim 1, wherein determining the sleep duration includes assessing a power status of the station (102; 103; 104; 105), the third information including the power status.

7. A computer program comprising instructions for performing the method of one of the claims 1-6.

8. A station (102; 103; 104; 105) for operation in a wireless communication network (100), the station (102; 103; 104; 105) comprising:

a non-transitory medium storing executable instructions for saving power in the wireless communication network (100), which when executed by the station (102; 103; 104; 105) perform steps comprising:

receiving a beacon from an access point, AP (101), the beacon including a traffic indication map, TIM; and

determining a sleep duration of the a station (102; 103; 104; 105) based on at least one of first information from the TIM to generate a random sleep duration, second information regarding previous operation of the station (102; 103; 104; 105), and third information regarding a status of the station (102; 103; 104; 105).

9. The station (102; 103; 104; 105) of claim 8, wherein determining the sleep duration includes:

determining a number of stations (102; 103; 104; 105) associated with the AP and having buffered data based on the TIM, the first information including the number of stations (102; 103; 104; 105);

dividing a beacon interval (606) into a number of slices, the number of slices being equal to the number of stations (102; 103; 104; 105); and

arbitrarily picking a slice for a wake up.

10. The station (102; 103; 104; 105) of claim 8, wherein determining the sleep duration includes:

determining a number of stations (102; 103; 104; 105) associated with the AP and having buffered data based on the TIM, the first information including the number of stations (102; 103; 104; 105);

dividing a beacon interval (606) into a first number of slices based on a fixed time duration for each slice; and

arbitrarily picking a slice for a wake up.

11. The station (102; 103; 104; 105) of claim 8, wherein determining the sleep duration includes:

> determining a number of stations (102; 103; 104; 105) associated with the AP and having buffered data based on the TIM, the first information including the number of stations (102; 103; 104; 105);
> dividing a beacon interval (606) into a first number of slices;
> determining a number and slice composition of overlapping sets of slices;
> choosing one set of slices based on the number of stations (102; 103; 104; 105); and
> arbitrarily picking a slice within the one set of slices for a wake up.

12. The station (102; 103; 104; 105) of claim 8, wherein determining the sleep duration includes reviewing historical collisions of the station (102; 103; 104; 105), the second information including the historical collisions.

13. The station (102; 103; 104; 105) of claim 8, wherein determining the sleep duration includes assessing a power status of the, the third information including the power status.

Wireless network
100

FIG. 1

CSMA-CA
Technique
200

Is channel idle?
201

No

Yes

Transmit RTS
202

CTS received?
203

No

Wait for random
backoff time
204

Yes

Transmit data
205

FIG. 2
Prior Art

300

Determine STAs of TIM
301

Create STA groups using
group selection logic
(first level proxy CSMA)
302

Send TIM based on
selected STA group
303

FIG. 3

Group Selection Logic 400

Lottery
401

Premium subscriptions
402

Home control
403

RSSI range rings
404

FIG. 4

500

Determine STAs of TIM
301

↓

Create STA groups using
group selection logic
302

↓

Select group based on
first level proxy CSMA
501

↓

Determine selection/staggering of STAs
based on second level proxy CSMA
502

↓

Set TIM based on second level proxy
CSMA and indicate STA staggering in
beacon
503

↓

Send beacon
504

FIG. 5

| Prepare beacon and TIM; insert stagger info in beacon 601 | Send beacon with TIM and stagger info 602 | Transmit data for AID:12 603 | Transmit data for AID:16 604 | Prepare new beacon and TIM 605 |
|---|---|---|---|---|

T1  T2  T3  T4  T5

Beacon interval 606

FIG. 6

EP 2 963 981 A1

700

FIG. 7

EP 2 963 981 A1

Figure 8

Europäisches
Patentamt

European
Patent Office

Office européen
des brevets

# EUROPEAN SEARCH REPORT

Application Number

EP 15 18 0525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/186907 A1 (WENTINK MAARTEN MENZO [NL]) 23 September 2004 (2004-09-23) * the whole document * | 1-13 | INV. H04W52/02 H04W74/00 H04W74/08 |
| A | US 2005/124313 A1 (SIMPSON FLOYD D [US] ET AL) 9 June 2005 (2005-06-09) * the whole document * | 1-13 | |
| A | US 2004/218620 A1 (PALM STEPHEN [US] ET AL) 4 November 2004 (2004-11-04) * the whole document * | 1-13 | |

TECHNICAL FIELDS
SEARCHED    (IPC)

H04W

The present search report has been drawn up for all claims

| Place of search | Date of completion of the search | Examiner |
|---|---|---|
| The Hague | 9 September 2015 | Lindhardt, Uffe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................................

& : member of the same patent family, corresponding
    document

EPO FORM 1503 03.82 (P04C01)

**EP 2 963 981 A1**

**ANNEX TO THE EUROPEAN SEARCH REPORT
ON EUROPEAN PATENT APPLICATION NO.**

EP 15 18 0525

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2015

| Patent document cited in search report | Publication date | Patent family member(s) | Publication date |
|---|---|---|---|
| US 2004186907 A1 | 23-09-2004 | US 2004186907 A1<br>WO 2004084493 A1 | 23-09-2004<br>30-09-2004 |
| US 2005124313 A1 | 09-06-2005 | NONE | |
| US 2004218620 A1 | 04-11-2004 | US 2004218620 A1<br>US 2008019344 A1<br>US 2012269107 A1<br>US 2013286914 A1 | 04-11-2004<br>24-01-2008<br>25-10-2012<br>31-10-2013 |

EPO FORM P0459

For more details about this annex : see Official Journal of the European Patent Office, No. 12/82

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61560778 A